# EUROPÄISCHE PATENTANMELDUNG

(11) **EP 2 345 850 A1**
(43) Veröffentlichungstag der Anmeldung: **20.07.2011**
(21) Anmeldenummer: 10008583.6
(22) Anmeldetag: 30.01.2008
(51) Int. Cl.: F24D 11/02, F24D 3/08, F24D 11/00, F24D 19/10, F25B 6/04, F25B 30/02, F28D 9/00, F28D 20/00

(54) **Wärmepumpe**

(30) Priorität: 26.02.2007 DE 102007009196
(62) Teilanmeldung aus: 08001685.0
(71) Anmelder: KIOTO Clear Energy AG, 9300 St. Veit an der Glan (AT)
(72) Erfinder: Berger, Erwin, 7000 Eisenstadt (AT); Eusch, Ingram, 9500 Villach (AT); Kreiner, Thomas, 2443 Loretto (AT); Stricker, Erwin, 7062 Sankt Margarethen (AT); Pavicsics, Reinhard, 2443 Leithaprodersdorf (AT)
(74) Vertreter: Becker, Thomas

(57) **Zusammenfassung**

Die Erfindung betrifft eine Wärmepumpe, die Bestandteil eines Warmwasser- und Heizungssystems ist, welches auf Basis erneuerbarer Energieträger arbeitet.

## Beschreibung

Die Erfindung betrifft eine Wärmepumpe, die Bestandteil eines Warmwasser- und Heizungssystems ist, welches auf Basis erneuerbarer Energieträger arbeitet. Aus wirtschaftlichen und politischen Gründen wird die Bedeutung erneuerbarer Energien immer größer. Die Gewinnung von Energie aus Sonne, Luft oder Erdwärme ist in verschiedenen Ausführungsformen bekannt. Dies gilt auch für Kombinationen der Systeme untereinander.

Im Bereich des Wohnungsbaus, aber auch bei Büros oder Gewerbebauten geht es insbesondere darum, Warmwasser für Heizkreise und/oder zur Erwärmung von Frischwasser aufzubereiten.

In diesem Zusammenhang stellt die kontinuierliche Energieversorgung ein erhebliches Problem dar. Im Sommer steht Sonnenenergie nahezu grenzenlos zur Verfügung; im Sommer besteht aber auch der geringste Bedarf an Warmwasser zum Heizen beziehungsweise zum Erwärmen von Frischwasser.

In Übergangszeiten, wie im Herbst, sowie im Winter, erhöht sich dieser Bedarf. Bei bewölktem Himmel und relativ niedrigen Außentemperaturen lassen sich beispielsweise über Sonnenkollektoren kaum nennenswerte Energiebeiträge leisten.

Mit der Erfindung soll eine Wärmepumpe zur Verfügung gestellt werden, die vielfältige Anwendungsmöglichkeiten erlaubt.

Zur Lösung dieser Aufgabe geht die Erfindung von folgenden Überlegungen aus:

Das Warmwasser- und Heizungssystem lässt sich in verschiedene Systemkreise gliedern. Ein so genannter Solekreis sorgt beispielsweise für die Erwärmung eines Trägermediums wie Glykol durch einen Sonnenkollektor. Steht genügend Primärenergie (Sonne) zur Verfügung lässt sich die Sole auf Temperaturen von 60°, 100° oder mehr Grad Celsius erwärmen und direkt über einen Wärmetauscher auf Wasser übertragen.

Der Solekreislauf kann alternativ über den Verdampferteil einer Wärmepumpe geführt werden, wo die Sole beispielsweise um 5°-10° C abgekühlt werden kann. Ein Kältemittel, welches in der Wärmepumpe zirkuliert, dient im Weiteren der Erwärmung von Wasser, welches in einem isolierten Behälter gespeichert werden kann.

Solekreislauf, Kältemittelkreislauf und Wasserkreislauf werden erfindungsgemäß also verknüpft.

Das System umfasst so genannte Primärenergie-Wärmetauscher (PWT). Dazu gehören die genannten Sonnenkollektoren, Luftwärmetauscher oder Erdwärmesonden in beliebiger Zahl und Kombination. Mit diesen PWTs wird Primärenergie, wie Sonnenenergie, auf ein Wärmeträger-Medium, nachstehend Sole genannt (beispielsweise Glykol) übertragen.

Das System umfasst weiters eine Wärmepumpe, die mindestens aus einem Verdampferteil, einem Kompressor, einem Kondensatorteil und einer Entspannungseinrichtung besteht, wobei die Wärmepumpe von einem Kältemittel, wie CO₂ oder Ammoniak, durchströmt wird.

Der Verdampferteil der Wärmepumpe kann von einem Wärmetauscher gebildet werden. Dieser wird als Sekundärenergie-Wärmetauscher (SWT) bezeichnet, weil im SWT die Wärmeübertragung von der bereits im PWT erwärmten Sole auf das Kältemittel oder umgekehrt erfolgt.

Ein SWT kann auch ein Wärmetauscher sein, der einen Wärmeübergang von der Sole auf Wasser ermöglicht.

Der Kondensatorteil der Wärmepumpe bildet in dieser Terminologie einen Tertiärenergie-Wärmetauscher (TWT), da in einer dritten Stufe Wärme vom Kältemittel auf Wasser übertragen wird.

Zum System gehört ferner ein so genannter Pufferspeicher, der einer geschichteten Speicherung von Wasser für mindestens einen geschlossenen Wasserkreislauf dient. Da warmes Wasser leichter als kaltes Wasser ist, ergibt sich im Pufferspeicher ein Temperaturgefälle von oben nach unten. Durch Zwischenböden, so genannte Schicht- oder Schichtenbleche, können unterschiedliche Abschnitte (Temperaturzonen) voneinander abgegrenzt werden, wobei strömungstechnische Verbindungen zwischen den Abschnitten erlaubt sind.

Das System ist an mindestens einen Hochtemperatur-Heizkreislauf (insbesondere für Radiatoren) anschließbar. Dazu lässt sich Wasser mit einer Vorlauftemperatur von beispielsweise 50°-90° C aus dem Pufferspeicher entnehmen. Ebenso kann ein Heizkreislauf für Niedrigtemperaturen angeschlossen werden, beispielsweise für Fußbodenheizungen, die mit Vorlauftemperaturen von beispielsweise 20°-60° C arbeiten.

Das Warmwasser des Pufferspeichers kann ebenso zum Aufheizen von Frischwasser genutzt werden, beispielsweise über einen zwischengeschalteten Wärmetauscher. Dazu weist der Pufferspeicher entsprechende Zu- und Ableitungen für das Zirkulationswasser auf.

Das in den Pufferspeicher zugeführte Wasser kann entsprechend seiner Temperatur in die entsprechende Temperaturzone geführt werden.

Mindestens ein Abschnitt (eine Temperaturzone) des Pufferspeichers kann eine Zusatz-Heizung aufweisen, um bei Bedarf unabhängig von den PWTs Wasser im Pufferspeicher aufheizen zu können. Die Zusatz-Beheizung kann beispielsweise über eine konventionelle Heizungsanlage mit fossilen Brennstoffen erfolgen. Ebenso ist eine elektrische Zusatzheizung möglich.

Als SWT oder TWT eignen sich alle Arten von Wärmetauschern, insbesondere Plattenwärmetauscher.

Die einzelnen Systemkomponenten, insbesondere innerhalb der funktionalen Systemkreise (Solekreis, Kältemittelkreis, Wasserkreis) können über geeignete Mehrwegeventile, die auch Mischventile sein können, einzeln oder in Gruppen, gegebenenfalls auch alle gleichzeitig, verbunden werden.

Danach betrifft die Erfindung in ihrer allgemeinsten Ausführungsform eine Wärmepumpe mit den Merkmalen von Anspruch 1. Die Wärmepumpe kann Bestandteil eines Warmwasser- und Heizungssystems sein, welches auf Basis erneuerbarer Energieträger arbeitet und folgende Merkmale aufweist:
- mindestens einen Primärenergie-Wärmetauscher aus der Gruppe: Sonnenwärmetauscher, Luftwärmetauscher, Erdwärmetauscher,
- jeder Primärenergie-Wärmetauscher weist mindestens eine dem Transport einer abgekühlten Sole dienende Zufuhrleitung und mindestens eine dem Transport der erwärmten Sole dienende Rückführleitung auf,
- die Rückführleitungen der Primärenergie-Wärmetauscher sind unmittelbar oder mittelbar an folgende Wärmetauscher strömungstechnisch anschließbar:

- einen als Sekundärenergie/-Wärmetauscher ausgebildeten Verdampfer einer Wärmepumpe zur Wärmeübertragung von der Sole auf ein Kältemittel,
- einen als Tertiärenergie-Wärmetauscher ausgebildeten Kondensator der Wärmepumpe zur Wärmeübertragung vom Kältemittel auf Wasser,
- einen autarken Sekundärenergie-Wärmetauscher zur Wärmeübertragung von der Sole auf Wasser, wobei
- das mindestens einen Sekundär- oder Tertiärenergie-Wärmetauscher durchströmende Wasser aus einem Pufferspeicher in den jeweiligen Wärmetauscher und von dort unmittelbar oder mittelbar zurück in den Pufferspeicher transportierbar ist,
- vom Pufferspeicher verlaufen wasserführende Leitungen zu
- mindestens einem Heizungskreislauf und/oder zu
- mindestens einem Wärmetauscher zur Übertragung auf einen Frischwasserkreislauf.

Der Begriff "autarker Sekundärenergie-Wärmetauscher" beschreibt einen Wärmetauscher, der nicht Bestandteil der Wärmepumpe und damit nicht Bestandteil des Kältemittelkreislaufes ist.

Erfindungsgemäß ist die Bauform aller Wärmetauscher weitestgehend beliebig. So können die Wärmetauscher im Gleichstrom oder im Gegenstrom arbeiten.

Der Pufferspeicher dient der Speicherung des erwärmten Wassers, aber auch der Rückführung von abgekühltem Wasser beispielsweise aus dem Heizkreislauf. Im Pufferspeicher sind unterschiedliche Temperaturzonen ausgebildet. Entsprechend wird der Zulauf von Kaltwasser unten, die Entnahme von Warmwasser für Radiatoren oben im Behälter des Pufferspeichers erfolgen.

Um die nachstehend beschriebenen Schaltzustände und Verfahrensvarianten einfacher regeln/steuern zu können, können sämtliche Rücklaufleitungen der Primärenergie-Wärmetauscher über ein Mehrwegeventil geführt werden. Über dieses Ventil lässt sich dann beispielsweise einstellen, ob ausschließlich der vom Luftwärmetauscher kommende Solestrom zum Verdampfer der Wärmepumpe geführt wird oder ob dieser Solestrom beispielsweise zuvor noch über den Sonnenkollektor geleitet wird.

Im letztgenannten Fall ist die Rückführleitung eines Primärenergie-Wärmetauschers strömungstechnisch mit einer Zuführleitung eines anderen Primär-Wärmetauschers verbunden.

Diese Verbindung kann in dem genannten Mehrwegeventil erfolgen.

Insbesondere zum Beladen des Systems, beispielsweise zum Auffüllen des Solekreislaufes mit Glykol,lassen sich alle im System befindlichen und von der Sole durchströmbaren Primärenergie-Wärmetauscher und Sekundär-Wärmetauscher, einschließlich zugehöriger Zufuhr- und Rückführleitungen, strömungstechnisch gleichzeitig verbinden, beispielsweise über das genannte Mehrwegeventil.

Analog lassen sich alle im System befindlichen und von dem Kältemittel durchströmbaren Sekundärenergie-Wärmetauscher und Tertiärenergie-Wärmetauscher, einschließlich zugehöriger Zuführ- und Rückführleitungen, strömungstechnisch zusammenschalten.

Auch der Wasserkreislauf, also alle im System befindlichen und von Wasser durchströmbaren Sekundärenergie-Wärmetauscher und Tertiärenergie-Wärmetauscher, einschließlich zugehöriger Zuführ- und Rückführleitungen, lassen sich auf diese Weise strömungstechnisch verbinden. Dies kann beispielsweise über ein weiteres, gemeinsames Mischventil erfolgen.

Von diesem Mischventil können mehrere wasserführende Leitungen zum Pufferspeicher abgehen, die in unterschiedliche Abschnitte des Pufferspeichers münden.

Der Pufferspeicher ist Bestandteil eines geschlossenen Wasserkreislaufes, von dem mindestens eine Wasserleitung zu mindestens einem Hochtemperatur-Heizkreiskauf (beispielsweise zur Beheizung von Radiatoren) und/oder von einem darunter liegenden Abschnitt mindestens eine Wasserleitung zu mindestens einem Niedrigtemperatur-Heizkreislauf (zum Beispiel zu einer Fußbodenheizung) verlaufen kann.

Da die Temperatur des Rücklaufwassers aus dem Hochtemperatur-Heizkreislauf größer ist als die Rücklauftemperatur des Wassers, welches zur Beheizung einer Fußbodenheizung dient, wird letztere an einer Stelle in den Pufferspeicher zurückgeführt, die unterhalb des Bereiches liegt, in den die Rückführleitung aus dem Hochtemperatur-Heizkreislauf einmündet.

Zur mittelbaren Erwärmung des Wassers im Pufferspeicher kann von dieser Systematik aber auch abgewichen werden, indem beispielsweise der Rücklauf des Hochtemperaturheizkreislaufes mit einer Temperatur von angenommen 35° C in einen Kaltwasserbereich des Pufferspeichers mit angenommen 20° C eingeleitet wird, um das Wasser dort zu erwärmen.

Weitere Merkmale der Erfindung sind Gegenstand der Merkmale der Unteransprüche sowie den sonstigen Anmeldungsunterlagen.

Die Erfindung wird nachstehend anhand verschiedener Ausführungsbeispiele näher erläutert.

Dabei zeigen - in stark schematisierter Darstellung -
Figur 1: ein Fließbild eines Warmwasser- und Heizungssystems
Figuren 2a)-f): verschiedene Systemzustände

Das Bezugszeichen 10 charakterisiert eine Gruppe von Sonnenkollektoren, das Bezugszeichen 12 eine Gruppe von Luftwärmetauschern. Beide werden von Glykol als Wärmeträger-Medium durchströmt, wobei Zu- und Ableitungen 10a, 10b für die Sonnenkollektoren 10 beziehungsweise 12a, 12b für die Luftwärmetauscher 12 an ein Mehrwegeventil 14 angeschlossen sind.

Vom Mehrwegeventil 14 verläuft eine Leitung 16a zu einem Plattenwärmetauscher 18; die korrespondiere Rückführleitung ist mit 16b gekennzeichnet. Weiters verläuft vom Mehrwegeventil 14 eine Leitung 20a zu einem Plattenwärmetauscher 22. Die korrespondierende Rückführleitung 20b mündet in das Ventil 14 ein.

Mit dem Mehrwegeventil 14 sind ferner eine Druck- und eine Saugseite 24a, 24b einer Pumpe verbunden, um den Glykolstrom durch die Leitungen 10a, 10b, 12a, 12b, 16a, 16b, 20a, 20b fördern zu können, die gemeinsam den Glykolkreislauf (= Solekreislauf) bilden.

Der Plattenwärmetauscher 22 ist Bestandteil einer Wärmepumpe, deren zughöriger Kompressor mit 26, deren zweistufiger Kondensator mit 28 und deren Entspannungsventil mit 30 gekennzeichnet ist. Die Strömungswege innerhalb der Wärmepumpe sind durch Pfeile gekennzeichnet.

Die erste Stufe 28a des Kondensators 28 wird von einem Plattenwärmetauscher gebildet, ebenso wie die zweite Stufe 28b. Beide werden im Gegenstrom von Wasser durchströmt, welches über eine Leitung 32 aus einem Pufferspeicher 34 gepumpt wird (Pumpe 36). Innerhalb des Kondensatorteils 28a können Teilströme des erwärmten Wassers weggeführt werden, was durch die Bezugszeichen 32a, 32b symbolisiert ist, wobei diese Leitungen in ein Mischventil 38 einmünden. Im Mischventil 38 können die über die Leitungen 32a, 32b mit unterschiedlicher Temperatur einlaufenden Wasserströme direkt oder nach Vermischung über Ablaufleitungen 40a, 40b, 40c, je nach Temperatur, in unterschiedliche Zonen des Pufferspeichers 34 eingespeist werden.

Das Volumen des Pufferspeichers 34 ist durch Zwischenböden 42, 44 in Zonen aufgeteilt, die strömungstechnisch (randseitig) verbunden sind. Entsprechend befindet sich oben, im Raum 46, das Wasser mit der höchsten Temperatur, beispielsweise 60°-90°, darunter (zwischen 42 und 44) ein Speicherraum für Wasser mittlerer Temperatur von beispielsweise 30°-60° (Raum 48) und schließlich unterhalb des Zwischenbodens 44 ein Kaltwasserraum 50.

Vom Raum 46 verläuft eine Warmwasserleitung 52a zu einem im Gegenstrom arbeitenden Spiralwärmetauscher 54. Die Rückleitung in den Raum 50 des Plattenspeichers 34 trägt die Ziffer 52b. Die im Wärmetauscher 54 durchgeführten Frischwasserströme sind mit 56a, 56b gekennzeichnet.

Aus dem oberen Teil des Raums 48 verläuft eine Leitung 58a zu einem ersten Heizkreis 60, an den nicht dargestellte Radiatoren angeschlossen sind. Die Rückführleitung trägt das Bezugszeichen 58b.

Ein zweiter Heizkreislauf 62 für eine Niedrigtemperatur-Fußbodenheizung ist mit einer Zulaufleitung 64a und einer Rücklaufleitung 64b gekoppelt. Die Zuführleitung verläuft vom mittleren Teil des Raumes 48 im Pufferspeicher 34, die Rückführleitung 46b mündet in den unteren Abschnitt des Raums 48.

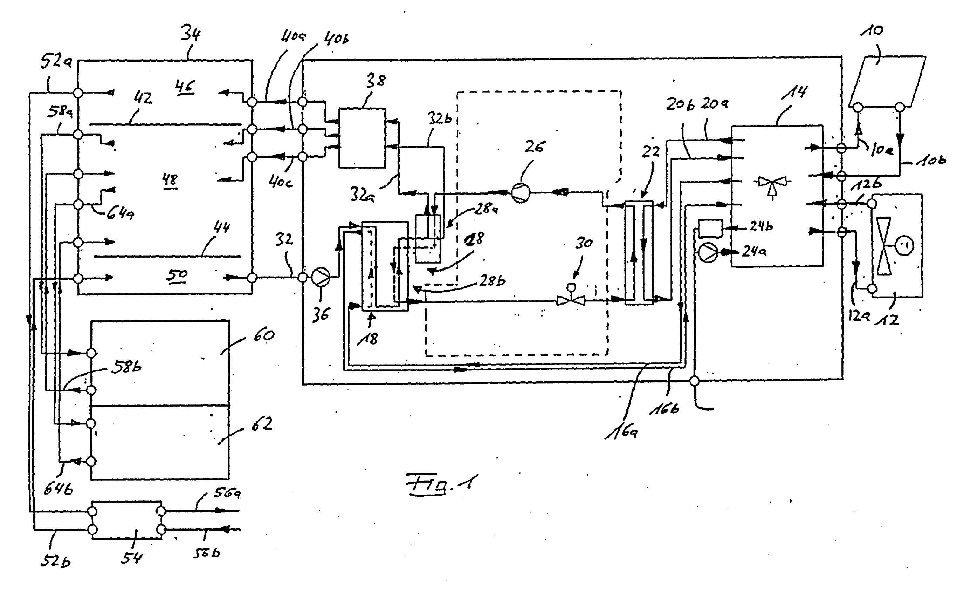

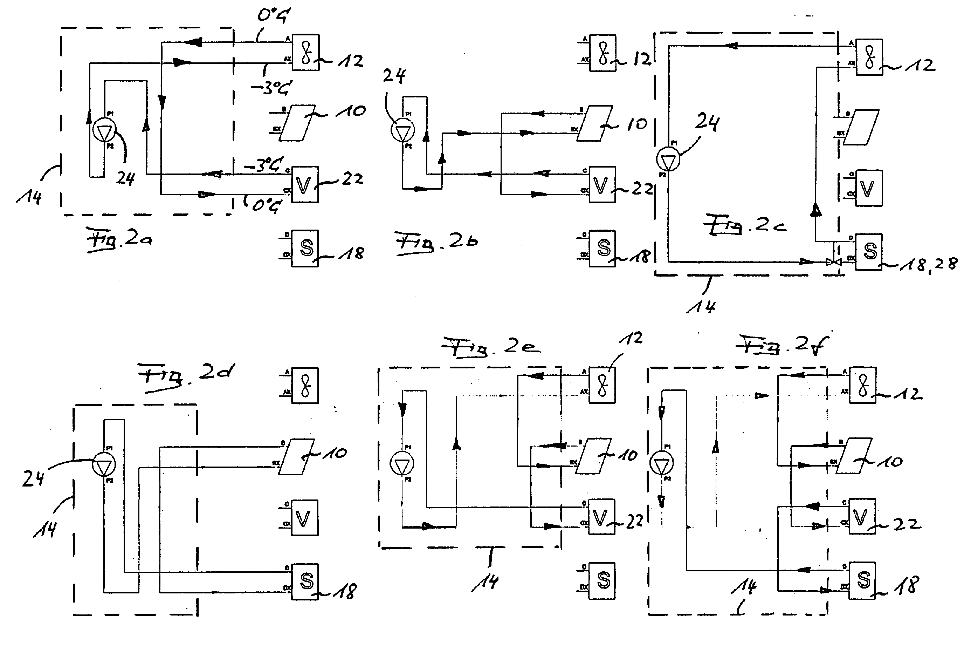

Figur 2a zeigt eine mögliche Schaltung des Systems gemäß Figur 1 im Winter bei geringen Außentemperaturen und ohne Sonnenschein.

Der Strömungsweg des Wärmeträger-Mediums (Glykol) ist durch Pfeile gekennzeichnet. An den Ein- und Ausgängen der zugehörigen Systembauteile sind beispielhafte Temperaturen für das Glykol angegeben. Bei dieser Fahrweise bleiben die Sonnenkollektoren 10 ebenso unbenutzt wie der autarke Wärmetauscher 18. Der Glykolstrom wird mit Hilfe der Pumpe 24 ausschließlich zwischen Luftwärmetauscher 12 und Verdampfer 22 geführt.

Auf der anderen Seite des Verdampfers 22 verdampft das Kältemittel; Dampf wird anschließend durch den Kompressor 26 geführt und dabei aufgewärmt. Es gelangt anschließend in den Kondensator 28, wird dort immer noch bei hohem Druck abgekühlt und schließlich kondensiert, bevor es durch das Entspannungsventil 30 geführt wird. Parallel wird Wasser im Kondensator 28 (den Plattenwärmetauschern 28a, 28b) im Gegenstrom erwärmt und über die Leitungen 32a und/oder 32b beziehungsweise 40a, b, c in den Pufferspeicher 34 geführt.

Figur 2b zeigt eine mögliche Systemeinstellung im Winter bei Sonneneinstrahlung. Es gilt die Terminologie zu Figur 2a. Anstelle des Luftwärmetauschers 12, der jetzt unbenutzt bleibt, tritt der Sonnenkollektor 10.

Im Winter kann es passieren, dass der Luftwärmetauscher 12 vereist. Für diesen Fall bietet das System die Möglichkeit der umgekehrten Fahrweise. Aus dem Pufferspeicher 34 wird Wasser über den Wärmetauscher 18 geleitet, um die Sole (Glykol) zu erwärmen, welches anschließend durch den Luftwärmetauscher 12 geführt wird und diesen abtaut. Erneut wird das Mehrwegeventil 14 zur Einstellung des gewünschten Strömungsweges genutzt (Fig. 2c).

Figur 2d zeigt die Systemführung im Sommer bei hohen Temperaturen und direkter Sonneinstrahlung. Die Wärmepumpe, die externe Energie benötigt, bleibt jetzt ungenutzt; ebenso der Luftwärmetauscher 12. Die Sonnenkollektoren 10 werden direkt an den autarken Wärmetauscher 18 angeschlossen, sodass ein direkter Wärmeübergang von der Sole (Glykol) auf das Wasser erfolgt. Die Verbindung der Kollektoren mit dem Wärmetauscher 18 wird wiederum über das Mehrwegeventil 14 gesteuert/geregelt.

Figur 2e zeigt eine alternative Fahrweise im Winter. Dabei wird der aus dem Luftwärmetauscher 12 entnommene Solestrom über das Ventil 14 in den Sonnenkollektor 10 geführt, bevor die Sole analog Figur 2b über das Ventil 14 und anschließend den Verdampfer 22 der Wärmepumpe geführt wird.

Diese Schaltung lässt sich analog im Sommer nutzen, um eine Überhitzung des Sonnenkollektors 10 zu vermeiden, wenn beispielsweise keine weitere Energiezufuhr in den Wasserspeicher benötigt wird. In diesem Betriebszustand wird der Solestrom mittels des Luftwärmetauschers 12 gekühlt.

Der Solestrom kann dazu auch am Verdampfer 22 vorbei direkt vom Sonnenkollektor 10 zum Luftwärmetauscher 12 und zurück zirkuliert

In Figur 2f ist der gesamte Glykolkreislauf dargestellt, wobei alle Zuführ- und Ablaufleitungen untereinander mit Hilfe des Mehrwegeventils 14 verbunden sind. Dieser Schaltzustand dient beispielsweise dem Befüllen des Glykolkreislaufes.

Die in der Anmeldung beschriebenen Merkmale können einzeln oder in unterschiedlichen Kombinationen auch unter Ausschluss einzelner Merkmale, für die Erfindung angewendet werden.

## Patentansprüche

1. Wärmepumpe eines Warmwasser- und Heizungssystems mit einem zweistufigen Kondensator (28), wobei eine erste Stufe (28a) und eine zweite Stufe (28b) jeweils von einem im Gegenstrom von Wasser durchströmbaren Plattenwärmetauscher gebildet werden und der Plattenwärmetauscher (18) der zweiten Stufe (28b) zum direkten Wärmeübergang von Sole auf Wasser an Sonnenkollektoren (10) anschließbar ist.

2. Wärmepumpe nach Anspruch 1, bei der eine Verbindung zwischen den Sonnenkollektoren (10) und dem Plattenwärmetauscher (18) der zweiten Stufe (28b) über ein Mehrwegeventil (14) gesteuert/geregelt wird.

3. Wärmepumpe nach Anspruch 1, bei der von der ersten Stufe (28a) des Kondensators (28) Leitungen (32a, 32b) zum Transport von Teilströmen erwärmten Wassers unterschiedlicher Temperatur wegführen.

4. Wärmepumpe nach Anspruch 3, bei der die Leitungen (32a, 32b) in ein Mischventil (38) einmünden.

5. Wärmepumpe nach Anspruch 4, bei der im Mischventil (38) über die Leitungen (32a, 32b) mit unterschiedlicher Temperatur einlaufende Wasserströme direkt oder nach Vermischung über Ablaufleitungen (40a, 40b, 40c), je nach Temperatur, in unterschiedliche Zonen eines Pufferspeichers (34) eingespeist werden.
